# EUROPEAN PATENT SPECIFICATION

(11) **EP 3 202 555 B1**
(45) Date of publication and mention of the grant of the patent: **25.07.2018**
(21) Application number: 15787246.6
(22) Date of filing: 28.09.2015
(51) Int. Cl.: B29C 65/08, B29C 65/78, B65B 7/02, B65B 51/22, B65B 51/14

(54) **DEVICE FOR WELDING A VALVE BAG AND CORRESPONDING PROCESS**
VORRICHTUNG ZUM SCHWEISSEN EINES VENTILBEUTELS UND ENTSPRECHENDES VERFAHREN
DISPOSITIF POUR SOUDER UN SAC À VALVE ET PROCÉDÉ CORRESPONDANT

(30) Priority: 30.09.2014 ES 201431443
(43) Date of publication of application: 09.08.2017
(73) Proprietor: Tecnicas Mecanicas Ilerdenses, S.L., 25190 Lleida (ES)
(72) Inventor: ARDERIU CABAU, Xavier, 25110 Alpicat (ES)
(74) Representative: Curell Suñol S.L.P.
(86) International application number: PCT/ES2015/070701
(87) International publication number: WO 2016/050998

(56) References cited:
- EP-A1- 0 571 342
- DE-C1- 3 400 154
- US-A- 4 734 142

## Description

### Field of the invention

The invention relates to a device for sealing a valve bag comprising at least one sealing clamp comprising first and second clamp parts and which is movable between an open position in which said first and second parts are spaced apart such as to allow the insertion of said valve between said first and said clamp second parts and a sealing position in which said first and clamp second parts are close to each other to seal the mouth of said valve.

Likewise, the invention relates to a process for sealing a valve bag comprising the step of inserting said valve of said bag between first and second sealing clamp parts which are in an open position.

### State of the art

The bags for the distribution of powdered products must be closed in such a way as to prevent the ingress of foreign bodies.

Conventionally there are mainly three types of bag.

The first type, known as FFS *(Form, Fill and Seal)* referring to the process by which the bag is formed, filled and sealed. These bags are formed from a roll of single layered or multi layered extruded polymer and having basically different proportions of polythene (PE) - either high density polythene (HDPE), low density polythene (LDPE) - or linear low density polythene (LLDPE) or polypropylene (PP). Furthermore, this type of bag may be provided with polyamide (PA) barrier layers or laminates of polythene terephthalate (PET) or aluminium. The roll for preparing the bag may be flat or tubular with or without side pleats.

The second type of bag is the open mouth type. In this case, the bags are bags which are filled through the open top and then subsequently closed. Closure may be carried out by sewing, gluing, sealing or combinations thereof. The bottom may be folded or flat, with or without side pleats.

Finally, the third type of bag is the valve bag. In this case, the bag has a pleated bottom and top. Furthermore, they do not have side pleats, although the bottom and top folds confer a very square shape to the bag. At the top end, the bag has an opening at the end of a tube projecting laterally from the bag main body and which is known in the art as a "valve". The valve allows for the entry or injection of product through a tube inserted in the interior thereof.

Depending on the product, this type of bags may be filled by gravity feed, by air injection by pneumatic transportation, by mechanical forcing or by transportation by a small auger inside the nozzle. The valve bag may be made from paper, PA multi layered, with a possible layer of PE, from PE or from woven PP.

The valve bags find wide application in the building industry, in the food industry or in the chemical industry. In the first case, the bag may be made from PA or multilayered for bagging building products, such as cement, adhesive cement, mortar or others. In the food sector, paper bags for packaging flour, starch, cake-making additive, are used more. Finally, in the chemical industry, chemicals such as pentaerithritol, e-PVC, or others are packaged.

In this type of bag, the valve was traditionally left open, but the bag lost product through the valve. To avoid this drawback, there is currently an increasing demand for the valve to be closed. This is necessary in the food sector to prevent the entry of foreign bodies in the bag, such as for example, rodents. On the other hand, in all applications, the aim is to avoid the loss of product through the open valve, with the associated risk of dirt and loss of part of the metered amount.

A first known solution is the solution of leaving the internal tube of the valve longer and folding it manually to the inside.

Alternatively, solutions have also been developed which close the valve automatically. When the bag is made from PA or woven PP, the valve is given a coating of PE. Since PE is a thermosetting polymer, the valve mouth may be closed by sealing. To this end, when the bag has been filled, the valve is withdrawn from the filling port, and a sealing clamp is used to close and seal the mouth of the valve simultaneously.

A relevant problem in this process consists of that, when the valve is withdrawn from the filling duct, the valve has the tubular shape of the filling duct. Prior to sealing the bag, the valve is required to be flat and as horizontal as possible. The function of holding down or flattening the valve is performed by the sealing clamp and may not be reliable in 100% of the cases. On the other hand, the two sheets forming the valve are anchored to the bag and extend outwardly in about 6-7 cms. Since it is a non-rigid element, the valve may itself bend and/or be moved when the shear stress of the approach of the sealing clamp is applied and lose thee mechanical reference. In other words the valve is not referenced prior to the sealing process. All of this impairs the correct making of the seam.

To solve this problem, EP 2008794 A2 proposes performing at least two spaced apart seams, by moving the sealing head sequentially, i.e., a first seam is made and, after the first one is terminated, the head is moved and the second seam is made. This system obviously unnecessarily lengthens the processing time, causes additional wear to the sealing clamp and means energy consumption proportional to the number of seams it is wanted to perform.

A further additional problem in this closing process is to be found in the cost of the sealing clamp. The sealing clamp is a member of high added value and high cost. Consequently, it would be desirable to avoid misuse thereof and extend their service life as long as possible.

Document DE 3400154 C1 discloses a device for filling and sealing bags, the valve tube of which consists of weldable material or is internally lined with such material, with a filling connection with a clamping device for the valve tube, a moveable bag seat with a pivotable floor support plate or the like and a welding assembly which consists of an anvil and a sonotrode which are moveable in relation to one another. Reliable welding of the bag valve is to be achieved in which only the free valve tube section is actually situated between the anvil and the sonotrode of the welding device and the bag valve is placed between the sonotrode and the anvil in an optimum position for welding. To this end the bag seat is pivotable about a vertical axis by means of a motor, pivoting cylinder or the like, and is able to travel in two directions at right angles to one another in a horizontal plane.

Document EP 0571342 A1 discloses a bag with a filler valve, essentially a sheath of heat sealable plastic material, is closed hermetically by first gripping the surfaces of the bag on either side of the corner nearest the valve in such a way as to flatten the mouth, applying mechanical pressure to the appropriate point from opposite directions through intersecting circular trajectories of which the radii are directed away from the bag, then securing the mouth by means of a heat generating device such as an ultrasonic sealer, which is incorporated together with the gripping mechanism into a single station; prior to the gripping and sealing steps, the filled bag can be tilted horizontal and compacted by applying pressure to the broader front and rear faces.

Document US 4734142 A discloses a sealing device suitable for sealing bagging material containing, for example, produce, such as meat or poultry, to form a produce-containing bag having a seal at one or both ends, and being particularly adapted for cooking or defrosting the produce in a microwave oven.

### Summary of the invention

It is an object of the invention to provide a device for sealing valve bags of the type indicated at the beginning, allowing the closure by sealing of the valve of a valve bag to be carried out efficiently from a functional and energy consumption point of view, and which simultaneously protects the sealing clamp and extends the service life thereof.

This purpose is achieved by a sealing device for valve bags according to claim 1. The foreclamp basically solves the problem of the clamp being rigid. When the foreclamp is applied, the outwardly projecting portion of the valve is referenced in space, ensuring that the seal is made in the contemplated area. In the state of the art, the function of centering/referencing the valve hose is carried out by the sealing clamp itself which, as already explained, is not so reliable. With the foreclamp system, the reliability of the seal, the position of the seal and the direction of the seal relative to the valve axis are better guaranteed and have a greater quality than in the those of the state of the art.

On the other hand, thanks to the foreclamp, the sealing clamp no longer performs holding functions, which limits the wear of the sealing clamp, since it only needs to close at a pressure sufficient to seal.

The invention further includes a number of preferred features that are object of the dependent claims and the utility of which will be highlighted hereinafter in the detailed description of an embodiment of the invention.

In one embodiment of the device, said sealing clamp and said foreclamp are arranged relative to each other such that during the sealing, said foreclamp is at said bag side and said sealing clamp is at said mouth side of said valve. When closing the valve mouth by holding it down with the foreclamp, a certain amount of air pressure, which will escape through the mouth, is generated. When withdrawing the filling duct, remains of powder may accumulate inside the valve. At the time of closing the foreclamp, an overpressure of air is created, tending to clean the interior of these product remains. Furthermore, there will always be more powder particles in suspension in the part of the valve close to the inside of the bag than in the part of the valve orientated towards the mouth. Consequently, the part of the valve on which the sealing clamp acts at the time of closing will be cleaner. A direct consequence of this is an improvement in the seam quality.

Preferably, said sealing clamp and said foreclamp are drivable by one same drive means to adopt said sealing position and said corresponding closed position, which greatly simplifies the construction of the machine.

In a preferred embodiment at least said second part of said foreclamp projects outwardly in the direction of the closing movement relative to said second part of said sealing clamp and said second part of said foreclamp and said second part of said sealing clamp are slidable relative to each other in the direction of said closing movement, against the bias of a recovery elastic member, thanks to which one single drive means allows the foreclamp to close before the sealing clamp.

In another embodiment of the device at least said first part of said foreclamp is L-shaped, with the base of said L defining a plane longer than 1 cm suitable for holding down said valve at the top thereof. Particularly preferably, the length of said plane is greater than 5 cm. The longer the L-shape is of one of the foreclamp parts, the lesser will be the risk of impreciseness in the holding, since slight misalignment between the first and second foreclamp parts can be compensated. Furthermore, this facilitates the flat arrangement of the valve and reduces errors in the sealing due to undesired wrinkles.

Particularly preferably, the device of the invention comprises a first blower device orientated on the outside of said valve in the area corresponding to said sealing clamp when it is in the sealing position. In addition to the holding down effect of the foreclamp, the blowing achieves a greater cleaning of the sealing area.

Alternatively, the first blower device is orientated on the inner face of said valve through said mouth. This provides the advantage of improving even more the quality of the seal. In addition to the holding down effect of the foreclamp, the blowing achieves a greater cleaning of the inner sealing area.

Particularly preferably, the first blower device is drivable after said foreclamp has adopted said closed position and before said sealing clamp adopts said sealing position. Thanks to this, inflation of the bag due to the air entering through the valve is avoided and additionally a particularly effective cleaning of the sealing area is achieved, since with the foreclamp closed, there is a turbulent flow in the point of holding of the foreclamp causing the expulsion of all the powder particles.

In another embodiment of the device said first blower device is orientated on the outer surface of said valve in the area corresponding to said sealing clamp when it is in the sealing position and said first blower device is drivable after said foreclamp has adopted said closed position and before said sealing clamp has adopted said sealing position. Thanks to this the outer seal is improved. Particularly, the cloud of powder that can be originated around the outside of the valve is blown away with the blower device before the sealing commences.

Also with the purpose of simplifying the machine as far as possible, the blower device is orientable alternatively between said inside and said outside of said valve.

In a further alternative embodiment, the device comprises a second blower device orientated on the outer surface of said valve in the area corresponding to said sealing clamp when it is in the sealing position and drivable in the opposite direction to said first blower device.

The invention also proposes a process solving the aforementioned problem of closing by sealing a valve bag efficiently from the functional and energy consumption points of view and which simultaneously protects the sealing clamp and extends the service life thereof.

This purpose is achieved with a process according to claim 12. To improve the quality of the seal, the process preferably comprises a first step of blowing on the outside of said valve in the area corresponding to said sealing clamp when it is in the sealing position, prior to at least the step of closing the sealing clamp. There is preferably contemplated a second blowing step of the inside of said valve, prior to at least the step of closing the clamp, since it eliminates the powder present in the sealing area in the interior of the valve.

Finally, the process of the invention optionally comprises a third step of blowing on the outer surface of said valve in the area corresponding to said sealing clamp when it is in the sealing position, said third blowing step being in the opposite direction to the direction of said first and second steps.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, a preferred embodiment of the invention is disclosed, with reference to the accompanying drawings in which:
Figure 1 is a schematic side view of a valve bag sealing machine including the device of the invention in a stand-by state during the bag filling process.
Figure 2 is a schematic side view of the device of Figure 1 with the foreclamp moving to the closed position.
Figure 3 is a schematic side view of the foreclamp and sealing clamp area of the device, with the foreclamp in the closed position and the sealing clamp about to reach the sealing position.
Figure 4 is a side detail view of the device of the invention, with the foreclamp in the open position.
Figure 5 is a bottom perspective view of the device of the invention, with the foreclamp in the open position.
Figure 6 is a side detail view of the device of the invention, with the foreclamp in the closed position.
Figure 7 is a bottom perspective view of the device of the invention, with the foreclamp in the closed position.
Figure 8 is a bottom view of the device of the invention, with the foreclamp in the open position.

### Detailed description of embodiments of the invention

In the figures there is to be schematically seen a machine for performing seals on bags 100 having a valve 102. These bags 100 are prefabricated bags which are fed to the machine through a feed arm not shown in the figures.

The machine has a main frame 106 on which there are mounted the different members required for carrying out the filling and subsequent sealing of the valve 102 bags 100.

At the bottom of the machine there is to be seen the filling device 108. This comprises a filling duct 110 on which there is placed the valve 102 of the bag 100 to be filled. The powdered material with which the bag 100 is filled is fed out through the duct 110. The material outfeed may be carried out in any of the ways known in the art, such as by gravity, by air injection through pneumatic transportation, by mechanical forcing or by transportation by a small auger inside the nozzle.

The bag 100 is supported on a support device 114 which is rockingly mounted relative to the main frame 106 on a four bar linkage 116. Thanks to this four bar linkage 116, when the bag 10 is full it may be withdrawn from the filling duct 110.

The device 1 for sealing a valve bag 100 according to the invention is optionally rockingly mounted on a four bar linkage 112 at the top of the machine. It is obviously not essential for the device 1 to be movable relative to the main frame 106 by means of this four bar linkage 112, but this facilitates the filling of the bag 100 by the filling device 108. Furthermore, as will be seen hereinafter, the downward movement of the device 1 allows the valve 102 to be closed and the air to be removed from the interior of the bag 100.

The device 1 of this embodiment comprises a sealing clamp 2 having first and second clamp parts 4, 6. It is obviously preferable for there to be only one sealing clamp, but the provision of further additional clamps is not to be discarded. The sealing clamp 2 is preferably an ultrasonic device, in which the first part 4 is the sonotrode while the second part 6 is the anvil. Alternatively, a seal could be carried out by heating due to an increase in the temperature of electrodes in the sealing clamp 2 having the task of partly melting the plastic in the sealing area.

The sealing clamp 2 is movable between an open position and a sealing position. In the open position, the first and second parts 4, 6 of the sealing clamp are spaced apart and allow the valve 102 to be inserted in the space between these first and second parts 4, 6. In the sealing position, the first and second parts 4, 6 are close to each other or in contact such that they allow the mouth 104 of the valve 102 of the bag 100 to be sealed.

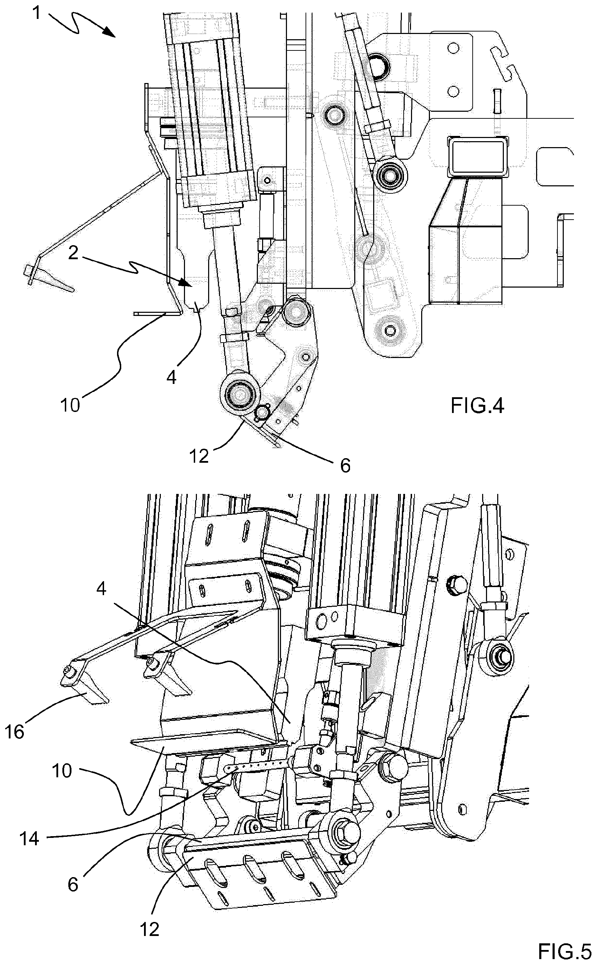

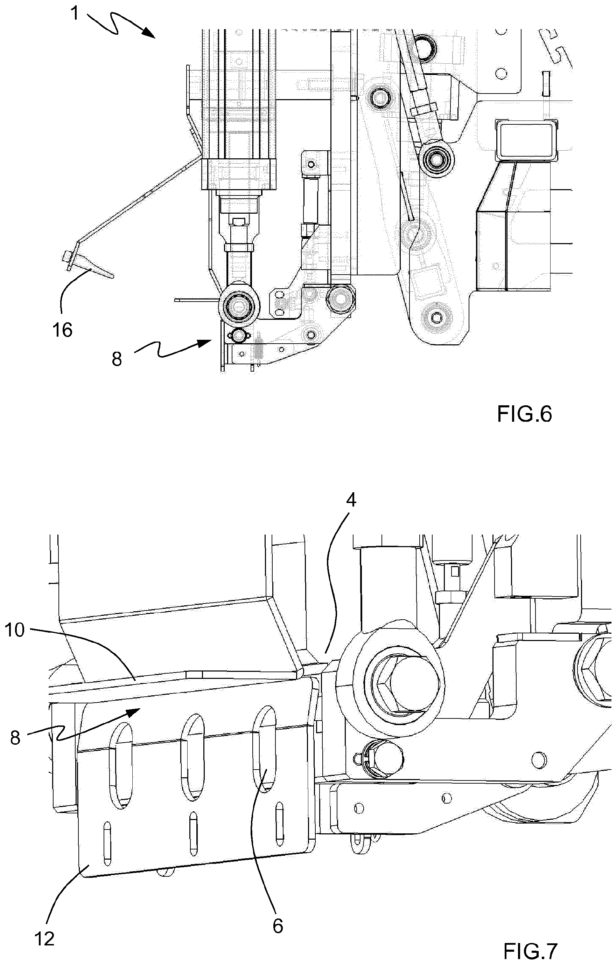

On the other hand, with the object of carrying out the sealing of the valve 102 of the bag 100 efficiently from the functional and energy consumption points of view and simultaneously protecting and extending the service life of the sealing clamp, the device 1 comprises a foreclamp 8 having first and second foreclamp 8 parts 10, 12. The foreclamp 8 is arranged adjacent the sealing clamp 2. This foreclamp 8 is movable between an open position and a closed position. In the open position, to be seen particularly well in Figures 4, 5 and 8, the foreclamp 8 allows the bag 100 to be inserted in the space existing between the first and second parts 10, 12 of the foreclamp 8. In the closed position, which is to be seen in Figures 6 and 7, the foreclamp 8 holds the mouth 104 of the valve 102, i.e. it holds the valve 102 at any point of the tube forming the valve 102 prior to the sealing process. Thus, to solve the above mentioned problem, in use, the foreclamp 8 always takes up the closed position before the sealing clamp 2 takes up the sealing position. Thereby, the mechanical wear is not experimented by the sealing clamp 2, but is supported mainly by the foreclamp 8.

The one skilled in the art will also understand that in the invention the direction in which the valve 102 is inserted in the sealing clamp 2 and foreclamp 8 is irrelevant. What is relevant is the position of the bag 100 just before the foreclamp 8 starts to close.

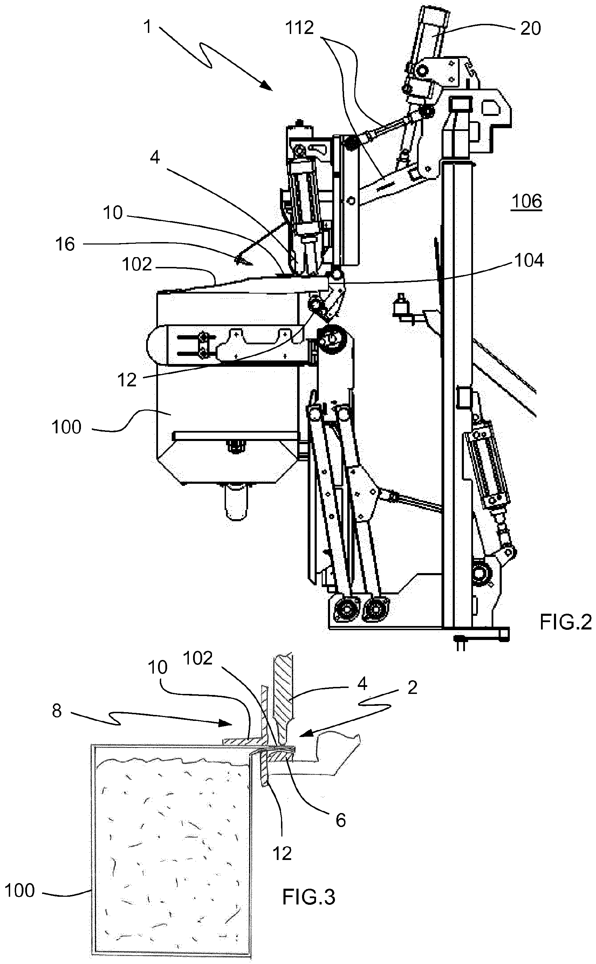

As is also to be seen in Figure 3, the sealing clamp 2 and the foreclamp 8 are arranged relative to each other in such a way that during the sealing the foreclamp 8 is at the bag 100 side and the sealing clamp 2 is at the mouth 104 side of the valve 102.

In the invention, the sealing clamp 2 and the foreclamp 8 could move independently of each other, provided that the foreclamp 8 closed first to be able to satisfactorily solve the proposed technical problem. Nevertheless, particularly preferably, the sealing clamp 2 and the foreclamp 8 are driven by one same drive means to adopt the corresponding sealing position and closed position.

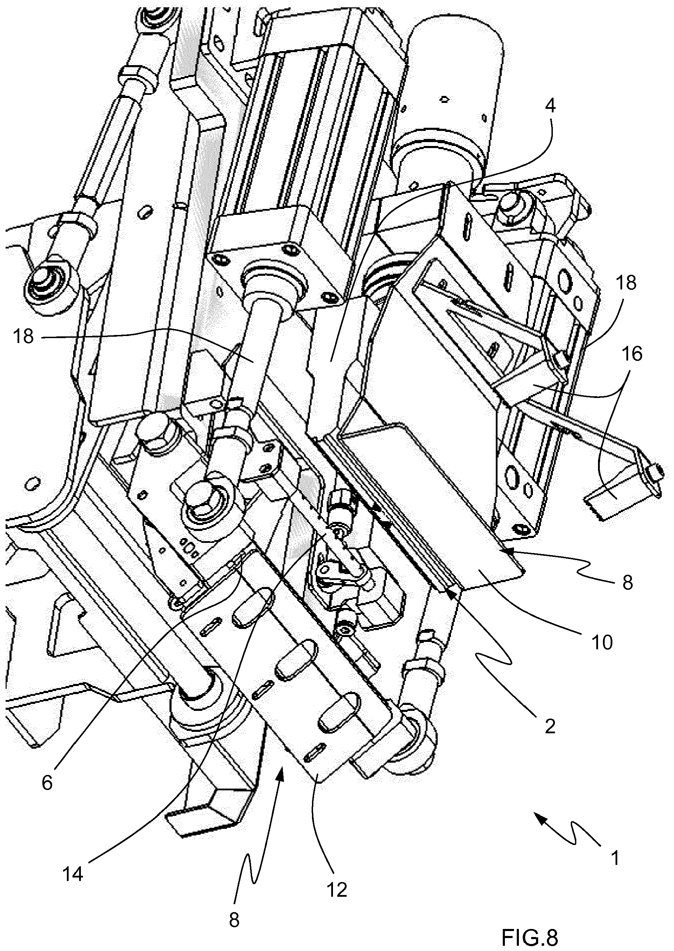

In spite of being driven by one same drive means, the invention contemplates that the second part 12 of the foreclamp 8 projects in the direction of the closing movement relative to the second part 6 of the sealing clamp 2 to achieve the desired closing sequence. This is to be seen particularly in Figures 3 or 8. In turn, to guarantee the closing according to the invention, the second part 12 of the foreclamp 8 and the second part 6 of the sealing clamp 2 are mounted slidingly relative to each other in the direction of the closing movement, against the bias of a recovery elastic member not shown in the figures. Namely, when the foreclamp 8 is in the closed position and the second part 12 abuts the first part 10, the drive cylinder 18 continues pulling the rocking assembly formed by the second parts 6 and 12 and the second part 6 of the sealing clamp 2 slides relative to the plate forming the second part 12 of the foreclamp 8 until it contacts the valve 102.

Also to improve the referencing of the valve 102 of the bag 100 and ejection of air when the valve 102 is crushed from above, the first part 10 of the foreclamp 8 is L-shaped, with the base of the L defining a plane having a length greater than 1 cm. As is to be seen in Figure 2, when the drive cylinder 20 is operated, the device 1 lowers and compresses the valve 102 with the first part 10, flattening it so that subsequently the second part 12 may come from underneath and find the valve 102 practically flat. This avoids unnecessary wrinkles.

Preferably, the device 1 is driven by pneumatic cylinders, but other types of drive, such as electric motors or other equivalent mechanisms, are not discarded.

Finally, the device 1 also comprises a first blower device 14 orientated on the inner face of the valve 102 through the mouth 104. This blower device 14 is formed by a perforated tube through which pressurized air exits in a known way. The first blower device 14 is operated before the sealing clamp 2 takes up the sealing position, which guarantees an efficient blowing in the sealing area, preventing the bag 100 from being inflated. This blowing may be carried out before the foreclamp 8 is in the closed position or afterwards. Nevertheless, it is desirable that at least the foreclamp 8 is holding down the valve 102 of the bag 100 from above to prevent the bag from being inflated with the pressurized air.

Preferably, the first blower device 14 is orientated on the outer surface of the valve 102 in the area corresponding to the sealing clamp 2 when this is in the sealing position and the first blower device 14 is drivable after the foreclamp 8 has adopted the closed position and before the sealing clamp 2 has adopted the sealing position.

In spite of the first blower device 14 shown in this embodiment being fixed, alternatively this could be orientable to direct the air flow towards the inside and on the outside of the valve 102, which would improve the effect of cleaning the valve 102 before commencing the sealing.

Finally, in an attempt to allow only the minimum amount of powder to get out of the bag 100, the device 1 also comprises a second blower device which is orientated on the outer surface of the valve 102 in the area corresponding to said sealing clamp 2 when it is in the sealing position. The second blower device 16 is drivable in the opposite direction to the first blower device 14 to create a recirculation of the powder to avoid this egress as far as possible.

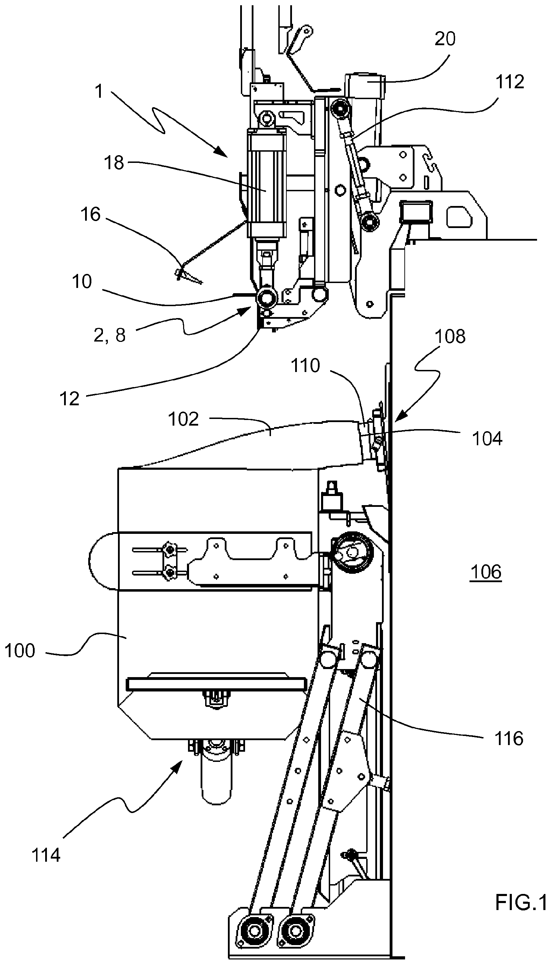

Hereinafter there will be explained the filling and sealing process on the bag 100, with reference to Figures 1 to 3.

In the first place, the valve 102 of the bag 100 is automatically placed on the filling duct 110 by a bag feeding device not shown in the figures. Then, the bag 100 is progressively filled and simultaneously weighed with the aid of pertinent sensors on the support device 114. Alternatively, the amount to be filled may be regulated by batches through the filling device. When the amount to be filled is correct, the filling process is halted and the four bar linkage 116 removes the bag 100 from the duct 110. On removal, the valve 102 of the bag 100 has the shape of the duct 110, as may be seen in Figure 1. This effect caused difficulties for the later sealing in the conventional devices.

Thereafter, the drive cylinder 20 is operated and the device 1 starts to descend. In this situation, both the sealing clamp 2 and the foreclamp 8 are in the open position. In this embodiment, the second parts 6, 12 of the sealing clamp 2 and the foreclamp 8 are mounted rockingly relative to the frame of the device 1. The rocking is of such a magnitude that in the open position, when the device 1 descends driven by the cylinder 20, neither part touches the valve 102. Thanks to this, the valve 102 may be smoothly inserted between the first and second parts 4, 10; 6, 12 of the sealing clamp 2 and the foreclamp 8. It is not essential for the invention for the second parts 6, 12 to be rocking. Alternatively, they could follow a linear movement.

As is to be seen in Figure 2, during the descent, the first part 10 of the foreclamp 8 touches the valve 102 with the L and holds it down, such that the valve 102 is favourably flattened for the subsequent sealing. The greater the surface area of the L is, the more easily will it flatten the valve 102. This also represents an important advantage and it is that on holding down the valve 102, the first part 10 of the foreclamp 8 closes the mouth 104 of the bag 100. Thanks to this, in one preferred embodiment of the process, there is contemplated a first blowing step on the outside of the valve 102, in the area corresponding to the sealing clamp 2 when it is in the sealing position. If the valve 102 is already flattened, the blowing preferably commences before the foreclamp 8 closes, but it could be carried out after the latter has closed. Thanks to the fact that the first part 10 of the foreclamp 8 is holding down the valve, the amount of air than can enter the bag 100 is reduced.

In this embodiment, simultaneously with the blowing, the second part 12 of the foreclamp 8 rocks towards the closed position and closes the mouth 104 of the valve 102 along the direction of extension of the foreclamp 8. This situation is shown in Figure 3. Therein, it is to be seen how the foreclamp 8 has already closed but, on the other hand, the sealing clamp 2 has not yet closed.

Thanks to the sliding assembly between the second parts 6, 12 of the sealing clamp 2 and the foreclamp 8, at this time, the clamp 2 slides towards the sealing position in which the first and second parts 4, 6 are close together to hold the valve 102 of the bag 100.

Then, the step of sealing the valve 102 is carried out and this is closed along the direction of extension of the sealing clamp 2. To this end, the sealing clamp 2 and the foreclamp 8 are arranged relative to each other such that during the sealing step, the foreclamp 8 is at the bag 100 side and the sealing clamp 2 is at the mouth 104 side, which is to be seen in Figure 3.

The process contemplates an optional step of blowing inside said valve 102 prior to sealing.

Finally, to reduce as far as possible any potential escape of powder, there is contemplated a third step of blowing on the outer surface of said valve 102 in the area corresponding to the sealing clamp 2 when it is in the sealing position, with this third blowing step being in the opposite direction to the direction of said first and second steps.

The embodiments hereto described are non-limiting examples, such that the man of the art will understand that combinations of features are possible as long as they fall under the scope of the appended claims. For example, the device of the invention could be mounted on a turret to increase the capacity of the installation.

## Claims

1. A device (1) for sealing a valve (102) bag (100) comprising at least one sealing clamp (2) comprising first and second clamp parts (4, 6) and which is movable between
[a] an open position in which said first and second parts (4, 6) are spaced apart such as to allow the insertion of said valve (102) between said first and said clamp second parts (4, 6) and
[b] a sealing position in which said first and clamp second parts (4, 6) are close to each other to seal the mouth (104) of said valve (102),
**characterized in that** it further comprises a foreclamp (8) comprising first and second foreclamp (8) parts (10, 12), said foreclamp (8) being arranged adjacent to said sealing clamp (2) and being movable between
[c] an open position allowing the insertion of said valve (102) between said first and second foreclamp (8) parts (10, 12) and
[d] a closed position, in which said foreclamp (8) holds said mouth (104) of said valve (102), and **in that**
[e] in use, said foreclamp (8) is suitable to take up said closed position before said sealing clamp (2) takes up said sealing position.

2. The device (1) of claim 1, **characterized in that** said sealing clamp (2) and said foreclamp (8) are arranged relative to each other such that during the sealing, said foreclamp (8) is at said bag (100) side and said sealing clamp (2) is at said mouth (104) side of said valve (102).

3. The device (1) of claim 1 or 2, **characterized in that** said sealing clamp (2) and said foreclamp (8) are drivable by one same drive means to adopt said corresponding sealing position and said closed position.

4. The device (1) of claim 3, **characterized in that** at least said second part (12) of said foreclamp (8) projects outwardly in the direction of the closing movement relative to said second part (6) of said sealing clamp (2) and **in that** said second part (12) of said foreclamp (8) and said second part (6) of said sealing clamp (2) are slidable relative to each other in the direction of said closing movement, against the bias of a recovery elastic member.

5. The device (1) of any one of claims 1 to 4, **characterized in that** at least said first part (10) of said foreclamp (8) is L-shaped, with the base of said L defining a plane longer than 1 cm suitable for holding down said valve (102) at the top thereof.

6. The device (1) of any one of claims 1 to 5, **characterized in that** it comprises a first blower device (14) orientated on the outside of said valve (102) in the area corresponding to said sealing clamp (2) when it is in the sealing position.

7. The device (1) of any one of claims 1 to 5, **characterized in that** said first blower device (14) is orientated on the inner face of said valve (102) through said mouth (104).

8. The device (1) of any one of claims 6 or 7, **characterized in that** said first blower device (14) is drivable after said foreclamp (8) has adopted said closed position and before said sealing clamp (2) adopts said sealing position.

9. The device (1) of any one of claims 6 to 8, **characterized in that** said first blower device (14) is orientated on the outer surface of said valve (102) in the area corresponding to said sealing clamp (2) when it is in the sealing position and **in that** said first blower device (14) is drivable after said foreclamp (8) has adopted said closed position and before said sealing clamp (2) has adopted said sealing position.

10. The device (1) of any one of claims 6 to 9, **characterized in that** said blower device (14) is orientable alternatively between said inside and said outside of said valve (102).

11. The device (1) of any one of claims 6 to 10, **characterized in that** it comprises a second blower device (16) orientated on the outer surface of said valve (102) in the area corresponding to said sealing clamp (2) when it is in the sealing position and drivable in the opposite direction to said first blower device (14).

12. A process for sealing a valve (102) bag (100) comprising the step of
[a] inserting said valve (102) of said bag (100) between first and second sealing clamp (2) parts which are in an open position,
**characterized in that** it further comprises the following steps:
[b] inserting said valve (102) of said bag (100) between first and second foreclamp (8) parts (10, 12) which are in an open position,
[c] moving said first and second foreclamp (8) parts (10, 12) to a closed position, in which said foreclamp (8) closes the mouth (104) of said valve (102) along the direction of extension of said foreclamp (8),
[d] moving said first and second sealing clamp (2) parts (4, 6) to a sealing position in which said first and second sealing clamp (2) parts (4, 6) are close to each other to seal said valve (102) of said bag (100), said foreclamp (8) taking up said closed position before said sealing clamp (2) takes up said sealing position,
[e] sealing said valve (102) to close said mouth (104) along the direction of extension of said sealing clamp (2),
said sealing clamp (2) and said foreclamp (8) being relatively arranged such that during said step [e], said foreclamp (8) is at said bag (100) side and said sealing clamp (2) is at said mouth (104) side of said valve (102).

13. The process of claim 12, **characterized in that** it comprises a first step of blowing on the outside of said valve (102) in the area corresponding to said sealing clamp (2) when it is in the sealing position, prior to at least said step [d].

14. The process of claim 12 or 13, **characterized in that** it comprises a second step of blowing the inside of said valve (102), prior to at least said step [d].

15. The process of any one of claims 12 to 14, **characterized in that** it comprises a third step of blowing on the outer surface of said valve (102) in the area corresponding to said sealing clamp (2) when it is in the sealing position, said third blowing step being in a direction opposite to the direction of said first and second steps.

## Patentansprüche

1. Vorrichtung (1) zum Verschließen eines Sacks (100), der ein Ventil (102) umfasst, die mindestens eine Verschlussklemme (2) umfasst, die einen ersten und einen zweiten Klemmenteil (4, 6) umfasst, und die zwischen
[a] einer offenen Stellung, in der der erste und der zweite Klemmenteil (4, 6) derart voneinander beabstandet sind, dass das Ventil (102) zwischen das erste und das zweite Klemmenteil (4, 6) eingeführt werden kann und
[b] einer Verschlussstellung, in der der erste und der zweite Klemmenteil (4, 6) derart nah beieinander stehen, dass sie die Mündung (104) des Ventils (102) verschließen,
verstellbar ist,
**dadurch gekennzeichnet, dass** sie ferner eine Vorklemme (8) umfasst, die einen ersten und einen zweiten Vorklemmenteil (10, 12) umfasst, wobei die Vorklemme (8) unmittelbar neben der Verschlussklemme (2) angeordnet ist und zwischen
[c] einer offenen Stellung, die die Einführung des Ventils (102) zwischen das erste und das zweite Vorklemmenteil (10, 12) ermöglicht, und
[d] einer geschlossenen Stellung, in der die Vorklemme (8) die Mündung (104) des Ventils (102) fixiert,
verstellbar ist, und dass
[e] die Vorklemme (8) im Betrieb dazu geeignet ist, die geschlossene Stellung einzunehmen, bevor die Verschlussklemme (2) die Verschlussstellung einnimmt.

2. Vorrichtung (1) nach Anspruch 1, **dadurch gekennzeichnet, dass** die Verschlussklemme (2) und die Vorklemme (8) in Bezug aufeinander derart angeordnet sind, dass während des Verschließens die Vorklemme (8) auf der Seite des Sacks (100) ist und die Verschlussklemme (2) in Bezug auf das Ventil (102) auf der Seite der Mündung (104) ist.

3. Vorrichtung (1) nach Anspruch 1 oder 2, **dadurch gekennzeichnet, dass** die Verschlussklemme (2) und die Vorklemme (8) von derselben Betätigungseinheit betätigbar sind, um jeweils die Verschlussstellung und die geschlossene Stellung einzunehmen.

4. Vorrichtung (1) nach Anspruch 3, **dadurch gekennzeichnet, dass** sich mindestens der zweite Vorklemmenteil (12) in Bezug auf den zweiten Klemmenteil (6) der Verschlussklemme (2) in Richtung der Verschlussbewegung erstreckt, und dass der zweite Vorklemmenteil (12) der Vorklemme (8) und der zweite Klemmenteil (6) der Verschlussklemme (2) in Bezug aufeinander in Richtung der Verschlussbewegung gegen die Vorspannung eines elastischen Rückfederungselements verschiebbar sind.

5. Vorrichtung (1) nach einem der Ansprüche 1 bis 4, **dadurch gekennzeichnet, dass** mindestens der erste Vorklemmenteil (10) der Vorklemme (8) L-förmig ist, wobei die Basis des L eine Ebene definiert, die länger als 1 cm ist und dazu geeignet ist, das Ventil (102) von oben niederzuhalten.

6. Vorrichtung (1) nach einem der Ansprüche 1 bis 5, **dadurch gekennzeichnet, dass** sie eine erste Blaseinrichtung (14) umfasst, die in dem Bereich der Verschlussklemme (2) in der Verschlussstellung auf die Außenseite des Ventils (102) gerichtet ist.

7. Vorrichtung (1) nach einem der Ansprüche 1 bis 5, **dadurch gekennzeichnet, dass** die erste Blaseinrichtung (14) durch die Mündung (104) auf die innere Seite des Ventils (102) gerichtet ist.

8. Vorrichtung (1) nach einem der Ansprüche 6 oder 7, **dadurch gekennzeichnet, dass** die erste Blasseinrichtung (14) betätigbar ist, nachdem die Vorklemme (8) die geschlossene Stellung eingenommen hat und bevor die Verschlussklemme (2) die Verschlussstellung eingenommen hat.

9. Vorrichtung (1) nach einem der Ansprüche 6 oder 8, **dadurch gekennzeichnet, dass** die erste Blasseinrichtung (14) in dem Bereich der Verschlussklemme (2) in der Verschlussstellung auf die äußere Oberfläche des Ventils (102) gerichtet ist, und dass die erste Blasseinrichtung (14) betätigbar ist, nachdem die Vorklemme (8) die geschlossene Stellung eingenommen hat und bevor die Verschlussklemme (2) die Verschlussstellung eingenommen hat.

10. Vorrichtung (1) nach einem der Ansprüche 6 bis 9, **dadurch gekennzeichnet, dass** die Blaseinrichtung (14) alternativ zwischen der Innenseite und der Außenseite des Ventils (102) orientierbar ist.

11. Vorrichtung (1) nach einem der Ansprüche 6 bis 10, **dadurch gekennzeichnet, dass** sie eine zweite Blaseinrichtung (16) umfasst, die in dem Bereich der Verschlussklemme (2) in der Verschlussstellung auf die äußere Oberfläche des Ventils (102) gerichtet ist, und die in entgegengesetzter Richtung zu der ersten Blaseinrichtung (14) betätigbar ist.

12. Verfahren zum Verschließen eines Sacks (100), der ein Ventil (102) umfasst, wobei das Verfahren folgenden Schritt umfasst:
[a] Einführen des Ventils (102) des Sacks (100) zwischen ein erstes und ein zweites Klemmenteil einer Verschlussklemme (2), die in einer offenen Stellung sind,
**dadurch gekennzeichnet, dass** das Verfahren ferner folgende Schritte umfasst:
[b] Einführen des Ventils (102) des Sacks (100) zwischen ein erstes und ein zweites Vorklemmenteil (10, 12) einer Vorklemme (8), die in einer offenen Stellung sind,
[c] Verstellen des ersten und des zweiten Vorklemmenteils (10, 12) in eine geschlossene Stellung, in der die Vorklemme (8) die Mündung (104) des Ventils (102) entlang der Richtung schließt, in der sich die Vorklemme (8) erstreckt,
[d] Verstellen des ersten und des zweiten Klemmenteils (4, 6) der Verschlussklemme (2) in eine Verschlussstellung, in der der erste und der zweite Klemmenteil (4, 6) der Verschlussklemme (2) nah beieinander stehen, um das Ventil (102) des Sacks (100) zu verschließen, wobei die Vorklemme (8) die geschlossene Stellung einnimmt bevor die Verschlussklemme (2) die Verschlussstellung einnimmt,
[e] Verschließen des Ventils (102), um die Mündung (104) entlang der Richtung zu schließen, in der sich die Verschlussklemme (2) erstreckt,
wobei die Verschlussklemme (2) und die Vorklemme (8) in Bezug aufeinander derart angeordnet sind, dass während des Schritts [e] die Vorklemme (8) auf der Seite des Sacks (100) ist und die Verschlussklemme (2) in Bezug auf das Ventil (102) auf der Seite der Mündung (104) ist.

13. Verfahren nach Anspruch 12, **dadurch gekennzeichnet, dass** es ferner einen ersten Schritt umfasst, der zumindest dem Schritt [d] vorgeht, und der folgendes umfasst: Anblasen der Außenseite des Ventils (102) in dem Bereich der Verschlussklemme (2) in der Verschlussstellung.

14. Verfahren nach Anspruch 12 oder 13, **dadurch gekennzeichnet, dass** es ferner einen zweiten Schritt umfasst, der zumindest dem Schritt [d] vorgeht, und der folgendes umfasst: Anblasen der Innenseite des Ventils (102).

15. Verfahren nach einem der Ansprüche 12 bis 14, **dadurch gekennzeichnet, dass** es ferner einen dritten Schritt umfasst, der folgendes umfasst: Anblasen der Außenseite des Ventils (102) in dem Bereich der Verschlussklemme (2) in der Verschlussstellung, wobei der dritte Schritt in einer Richtung stattfindet, die der Richtung des ersten und des zweiten Schritts entgegengesetzt ist.

## Revendications

1. Dispositif (1) pour sceller un sac (100) à valve (102) comprenant au moins une mâchoire de scellage (2) comprenant des première et deuxième parties de mâchoire (4, 6) et qui est mobile entre
[a] une position ouverte dans laquelle lesdites première et deuxième parties (4, 6) sont espacées l'une de l'autre de manière à permettre l'insertion de ladite valve (102) entre lesdites première et deuxième parties de mâchoire (4, 6), et
[b] une position de scellage dans laquelle lesdites première et deuxième parties de mâchoire (4, 6) sont proches l'une de l'autre pour sceller l'ouverture (104) de ladite valve (102),
**caractérisé en ce qu'il** comprend en outre une prémâchoire (8) comprenant des première et deuxième parties (10, 12) de prémâchoire (8), ladite prémâchoire (8) étant agencée adjacente à ladite mâchoire de scellage (2) et pouvant être déplacée entre
[c] une position ouverte permettant l'insertion de ladite valve (102) entre lesdites première et deuxième parties (10, 12) de prémâchoire (8), et
[d] une position fermée, dans laquelle ladite prémâchoire (8) maintient ladite ouverture (104) de ladite valve (102), et **en ce que**
[e] en cours d'utilisation, ladite prémâchoire (8) est adaptée pour occuper ladite position fermée avant que ladite mâchoire de scellage (2) n'occupe ladite position de scellage.

2. Dispositif (1) de la revendication 1, **caractérisé en ce que** ladite mâchoire de scellage (2) et ladite prémâchoire (8) sont agencées l'une par rapport à l'autre de sorte que pendant le scellage, ladite prémâchoire (8) se trouve du côté dudit sac (100) et ladite mâchoire de scellage (2) se trouve du côté de ladite ouverture (104) de ladite valve (102).

3. Dispositif (1) de la revendication 1 ou 2, **caractérisé en ce que** ladite mâchoire de scellage (2) et ladite prémâchoire (8) peuvent être entraînées par un même moyen d'entraînement pour adopter ladite position de scellage et ladite position fermée correspondantes.

4. Dispositif (1) de la revendication 3, **caractérisé en ce qu'**au moins ladite deuxième partie (12) de ladite prémâchoire (8) fait saillie vers l'extérieur dans la direction du mouvement de fermeture par rapport à ladite deuxième partie (6) de ladite mâchoire de scellage (2) et **en ce que** ladite deuxième partie (12) de ladite prémâchoire (8) et ladite deuxième partie (6) de ladite mâchoire de scellage (2) peuvent coulisser l'une par rapport à l'autre dans la direction dudit mouvement de fermeture, contre la sollicitation d'un élément élastique de récupération.

5. Dispositif (1) de l'une quelconque des revendications 1 à 4, **caractérisé en ce qu'**au moins ladite première partie (10) de ladite prémâchoire (8) est en forme de L, la base de ce L définissant un plan plus long que 1 cm adapté pour maintenir ladite valve (102) au sommet de celle-ci.

6. Dispositif (1) de l'une quelconque des revendications 1 à 5, **caractérisé en ce qu'**il comprend un premier dispositif de soufflage (14) orienté sur l'extérieur de ladite valve (102) dans la zone correspondant à ladite mâchoire de scellage (2) lorsqu'elle se trouve dans la position de scellage.

7. Dispositif (1) de l'une quelconque des revendications 1 à 5, **caractérisé en ce que** ledit premier dispositif de soufflage (14) est orienté sur la face interne de ladite valve (102) à travers ladite ouverture (104).

8. Dispositif (1) de l'une quelconque des revendications 6 ou 7, **caractérisé en ce que** ledit premier dispositif de soufflage (14) peut être entraîné après que ladite prémâchoire (8) a adopté ladite position fermée et avant que ladite mâchoire de scellage (2) n'adopte ladite position de scellage.

9. Dispositif (1) de l'une quelconque des revendications 6 à 8, **caractérisé en ce que** ledit premier dispositif de soufflage (14) est orienté sur la surface externe de ladite valve (102) dans la zone correspondant à ladite mâchoire de scellage (2) lorsqu'elle se trouve dans la position de scellage et **en ce que** ledit premier dispositif de soufflage (14) peut être entraîné après que ladite prémâchoire (8) a adopté ladite position fermée et avant que ladite mâchoire de scellage (2) n'ait adopté ladite position de scellage.

10. Dispositif (1) de l'une quelconque des revendications 6 à 9, **caractérisé en ce que** ledit dispositif de soufflage (14) peut être orienté de manière alternative entre ledit intérieur et ledit extérieur de ladite valve (102).

11. Dispositif (1) de l'une quelconque des revendications 6 à 10, **caractérisé en ce qu'**il comprend un deuxième dispositif de soufflage (16) orienté sur la surface externe de ladite valve (102) dans la zone correspondant à ladite mâchoire de scellage (2) lorsqu'elle se trouve dans la position de scellage et peut être entraîné dans la direction opposée audit premier dispositif de soufflage (14).

12. Procédé de scellage d'un sac (100) à valve (102) comprenant l'étape consistant
[a] à insérer ladite valve (102) dudit sac (100) entre des première et deuxième parties de mâchoire de scellage (2) qui se trouvent dans une position ouverte,
**caractérisé en ce qu'**il comprend en outre les étapes suivantes consistant :
[b] à insérer ladite valve (102) dudit sac (100) entre des première et deuxième parties (10, 12) de prémâchoire (8) qui se trouvent dans une position ouverte,
[c] à déplacer lesdites première et deuxième parties (10, 12) de prémâchoire (8) vers une position fermée, dans laquelle ladite prémâchoire (8) ferme l'ouverture (104) de ladite valve (102) le long de la direction d'extension de ladite prémâchoire (8),
[d] à déplacer lesdites première et deuxième parties (4, 6) de mâchoire de scellage (2) vers une position de scellage dans laquelle lesdites première et deuxième parties (4, 6) de mâchoire de scellage (2) sont proches l'une de l'autre pour sceller ladite valve (102) dudit sac (100), ladite prémâchoire (8) occupant ladite position fermée avant que ladite mâchoire de scellage (2) n'occupe ladite position de scellage,
[e] à sceller ladite valve (102) pour fermer ladite ouverture (104) le long de la direction d'extension de ladite mâchoire de scellage (2),
ladite mâchoire de scellage (2) et ladite prémâchoire (8) étant agencées de manière relative de sorte que pendant ladite étape [e], ladite prémâchoire (8) se trouve du côté dudit sac (100) et ladite mâchoire de scellage (2) se trouve du côté de ladite ouverture (104) de ladite valve (102).

13. Procédé de la revendication 12, **caractérisé en ce qu'**il comprend une première étape de soufflage sur l'extérieur de ladite valve (102) dans la zone correspondant à ladite mâchoire de scellage (2) lorsqu'elle se trouve dans la position de scellage, préalablement à au moins ladite étape [d].

14. Procédé de la revendication 12 ou 13, **caractérisé en ce qu'**il comprend une deuxième étape de soufflage de l'intérieur de ladite valve (102), préalablement à au moins ladite étape [d].

15. Procédé de l'une quelconque des revendications 12 à 14, **caractérisé en ce qu'**il comprend une troisième étape de soufflage sur la surface externe de ladite valve (102) dans la zone correspondant à ladite mâchoire de scellage (2) lorsqu'elle se trouve dans la position de scellage, ladite troisième étape de soufflage étant dans une direction opposée à la direction desdites première et deuxième étapes.
